(19) Europäisches Patentamt / European Patent Office / Office européen des brevets

(11) **EP 2 846 027 A1**

(12) **EUROPEAN PATENT APPLICATION**

(43) Date of publication:
11.03.2015 Bulletin 2015/11

(51) Int Cl.:
*F02D 41/14* (2006.01)  *F02D 41/00* (2006.01)

(21) Application number: 13191769.2

(22) Date of filing: 06.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 10.09.2013 EP 13183643

(71) Applicant: Delphi International Operations Luxembourg S.à r.l.
4940 Bascharage (LU)

(72) Inventors:
• **Schreurs, Bart**
B-6700 Waltzing (BE)
• **Peters, Michel Henri**
L-1135 Luxembourg (LU)

(74) Representative: **Neill, Andrew Peter**
Delphi Diesel Systems
Patent Department
Courteney Road
Gillingham, Kent ME8 0RU (GB)

(54) **Method to determine exhaust manifold pressure**

(57)  A method of determining the exhaust manifold pressure in an engine system which includes a turbocharger, comprising: i) determining the compressor pressure ratio; ii) determining the turbine pressure ratio from step i); iii) determining the exhaust manifold pressure from the turbine pressure ratio. Step ii) may comprise multiplying the determined compressor pressure ratio by a factor, e.g. from a stored look-up table.

*FIG 2*

| X\Y | 1.0000 | 1.2500 | 1.5000 | 1.7500 | 2.0000 | 2.2500 | 2.5000 | 2.8000 |
|---|---|---|---|---|---|---|---|---|
| 5.00 | 1.02002 | 1.08002 | 1.07001 | 1.03998 | 1.03003 | 1.03003 | 1.01501 | 1.01501 |
| 10.00 | 1.08002 | 1.08002 | 1.07001 | 1.03998 | 1.03003 | 1.03003 | 1.01501 | 1.01501 |
| 20.00 | 1.14001 | 1.12000 | 1.07501 | 1.03998 | 1.03497 | 1.03497 | 1.01501 | 1.01501 |
| 40.00 | 1.26501 | 1.24298 | 1.12000 | 1.10999 | 1.08002 | 1.04999 | 1.01501 | 1.01501 |
| 50.00 | 1.26501 | 1.24298 | 1.23999 | 1.23999 | 1.15002 | 1.10999 | 1.08002 | 1.03998 |
| 60.00 | 1.26501 | 1.24298 | 1.23999 | 1.23999 | 1.22998 | 1.20001 | 1.09998 | 1.06000 |
| 70.00 | 1.26501 | 1.24298 | 1.23999 | 1.23999 | 1.22998 | 1.20001 | 1.10999 | 1.08002 |
| 80.00 | 1.26501 | 1.24298 | 1.23999 | 1.23999 | 1.22998 | 1.20001 | 1.12000 | 1.09998 |

1 - PSE_P3_EST_COMP_PRATIO_MUL_APM
3D  2D  Val  PHY2  HEX  Setup  Modif

EP 2 846 027 A1

## Description

## Field of the Invention

This disclosure relates to a method of determining exhaust manifold pressure of internal combustion engines and has particular application to engines which include turbochargers.

## Background

Exhaust manifold pressure is an important parameter that is used in automotive applications such as in Engine Management Control by e.g. an Electronic Control Unit (ECU), to manage and control a variety of functions including control of the engine, as well as catalytic and other systems. This parameter is also required for fast and accurate control of the exhaust gas recirculation rate (EGR) rate in a turbocharged engine.

Although a suitably located pressure sensors can be used to determine this parameter, for cost and durability reasons, this is not popular in the automotive industry.

A known method to determine this pressure without the use of a bespoke sensor, is to use parameters such as the position of a turbocharger wastegate and the exhaust (turbine) flow to calculate exhaust manifold pressure. Such parameters can be used to provide or model exhaust manifold pressure. For example, in known methodology, the waste gate position and the turbine flow are used to determine a turbine pressure ratio by using a look-up table. The sum of the delta pressures (pressure losses) in the exhaust line downstream of the turbine and ambient pressure are multiplied by the turbine pressure ratio to give the exhaust manifold pressure, often referred to as "P3".

A problem with this approach however is that on low cost applications it is undesirable to use a position feedback on the wastegate of the turbocharger and hence it is not possible to have an exhaust manifold pressure model to perform a fast and accurate EGR control.

It is an object of the invention to provide an inexpensive method of determining exhaust manifold pressure (P3) which can be used in low cost applications without needing wastegate feedback control parameters.

## Summary of the Invention

In one aspect of the invention is provided A method of determining the exhaust manifold pressure in an engine system which includes a turbocharger, comprising: i) determining the compressor pressure ratio; ii) determining the turbine pressure ratio from step i); and iii) determining the exhaust manifold pressure from the turbine pressure ratio.

Step ii) may comprise multiplying the determined compressor pressure ratio by a factor. The factor may be determined from a stored look-up table. The factor may be dependent on measured or estimated compressor flow and compressor pressure ratio.

The method may include measuring or estimating, and utilising the parameter, of boost pressure. This parameter may be used in determining or estimating a compressor outlet pressure.

The method may comprise dividing the measured or estimated compressor outlet pressure by the compressor inlet pressure.

The measured or estimated compressor outlet pressure may be determined from the (measured) boost pressure plus optionally any intercooler pressure losses, if an intercooler is present.

The compressor inlet pressure may be determined from the ambient pressure, and optionally, minus estimated air filter or other inlet pressure losses.

A compensation algorithm may be used to remove the measured/estimated boost pressure lag.

The exhaust manifold pressure may be determined by multiplying the determined turbine pressure ratio by the sum of the pressure losses in the exhaust system together with the ambient pressure.

In a further aspect of the invention is provided also an apparatus to determine the exhaust manifold pressure in an engine system which includes a turbocharger, comprising: i) means to determine the compressor pressure ratio; ii) means to determine the turbine pressure ratio from compressor ratio; iii) means to determine the exhaust manifold pressure from the turbine pressure ratio.

## Brief Description of Drawings

Figure 1 shows a schematic view of a turbocharger system.

Figure 2 shows an example of a look-up table used on one example.

Figure 3 shows a schematic diagram of (the downstream section) an exhaust system.

## Description of Examples

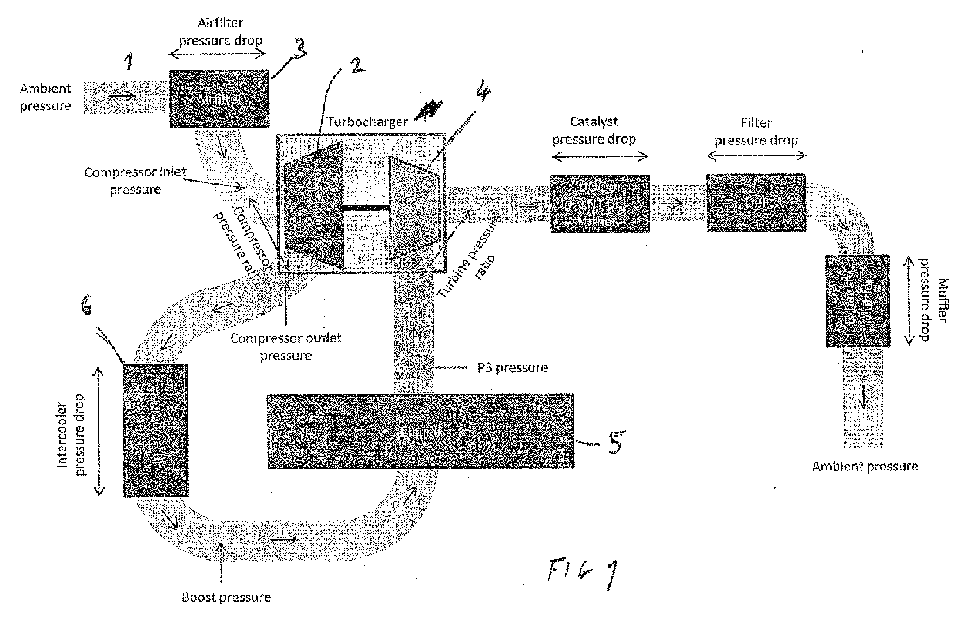

Figure 1 shows a schematic diagram of a turbocharger system for a combustion engine 5 showing on air inlet 1 to a compressor 2. An air filter 3 is typically located between the air inlet and the compressor. Compressed air is fed into the engine from the compressor outlet and may be via an intercooler 6. A turbine 4, connected to the compressor, is located downstream of the engine e.g. downstream of the exhaust manifold/port. The turbine includes a wastegate arrangement (not shown) which is typically controlled dependent on pressure in the air inlet by means of a wastegate bypass regulator. Other components downstream of the turbine will be described in more detail hereinafter. Typically an intercooler 6 is located between the compressor outlet and engine.

According to a simple example of the invention, the compressor pressure ratio is determined and used to determine the turbine pressure ratio. From this the exhaust manifold pressure is determined.

The compressor pressure ratio is the compressor outlet pressure divided by the compressor inlet pressure. The inlet pressure can be determined from the ambient pressure and more accurately the ambient pressure minus any pressure drop such as the air filter drop. The compressor outlet pressure may be based on the measured or estimated boost pressure. In a simple embodiment the compressor outlet pressure is taken to be the boost pressure. However in systems where there is an intercooler, preferably the measured or estimated compressor outlet pressure is based on the measured or estimated boost pressure plus an estimated pressure drop over the intercooler.

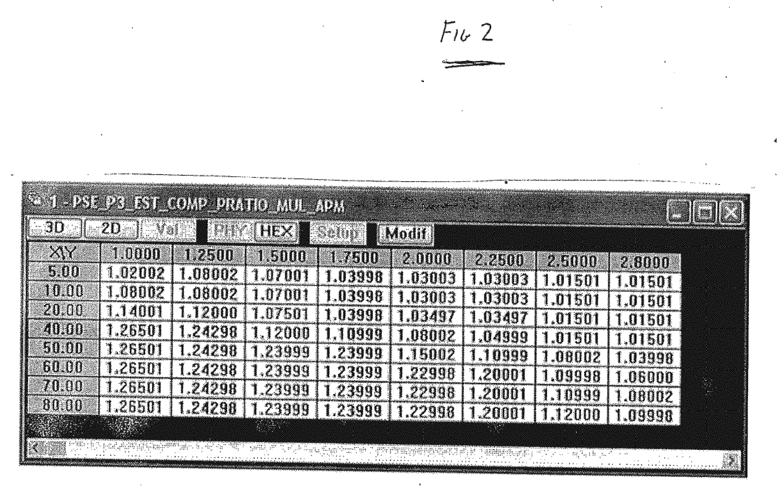

The determined compressor pressure ratio is multiplied by a factor. This factor may be determined by referring to a look up table such as a 2- dimensional table which relates the factor as a function of standard compressor flow and compressor pressure ratio. Figure 2 shows such a table. The parameter along the top row of the table is the compressor pressure ratio= pressure at the outlet of the compressor divided by the pressure at the inlet of the compressor. The pressure at the air inlet may be determined from the ambient pressure (measured) minus any pressure loss in the air filter (measured or modelled based on measured flow).

The parameter along the first column of the look up table is compressor flow. This flow can be measured with an air meter which is typically installed in the inlet duct between the air filter and the compressor inlet. Alternatively it can be determined from the cylinder air mass which can be estimated using the ideal gas law and a model of the intake port EGR rate :

where:

$$m_{air,cyl} = \frac{P_{MAP} \cdot V_{cyl} \cdot VE}{R \cdot T} \cdot \frac{(100 - EGR_{rate})}{100}$$

$P_{MAP}$ is the intake manifold pressure in kPa; Vcyl is the cylinder volume in litres; VE is the volumetric efficiency mapped versus engine speed and intake manifold pressure (or engine pressure ratio); R is the gas constant in J/kg · K; T is the intake port temperature in K; and EGR rate is the intake port EGR rate estimate in %.

To summarise the above steps, the result of the multiplication of the determined compressor pressure ratio by the factor from the look-up table is the turbine pressure ratio.

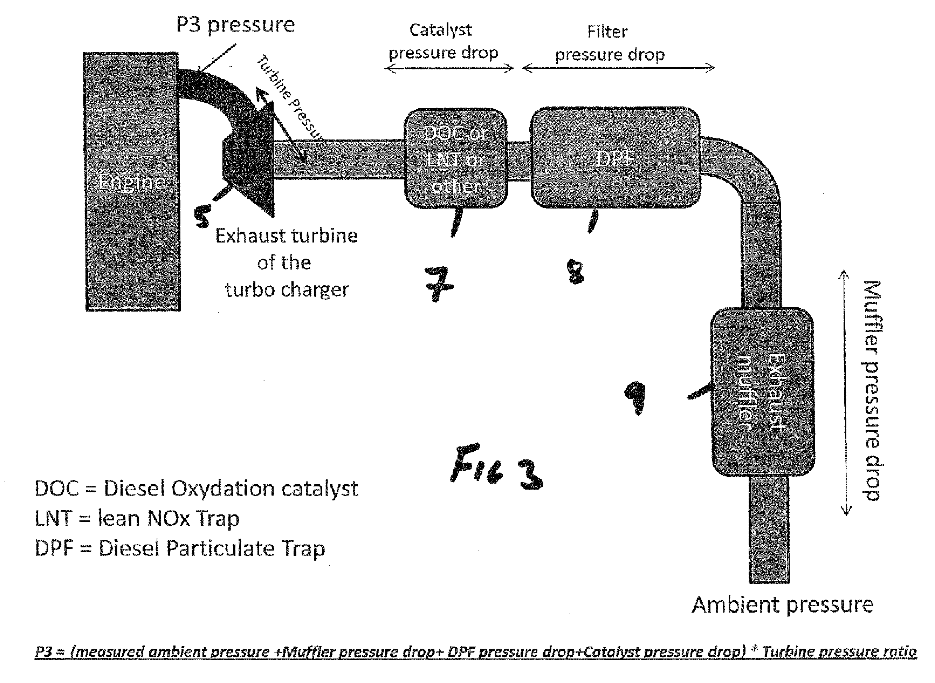

From the turbine pressure ratio, the value of the exhaust manifold pressure can be determined using existing techniques. This can comprise determining the sum of the (delta) losses which are the different pressure losses in the exhaust line elements. In an example, this may comprise the pressure loss over the catalyst(s), the pressure loss over the particulate filter and the pressure loss over the exhaust muffler: these pressure losses are either modelled or measured. Typically the pressure loss of a particulate filter is measured since this pressure loss is dependent on the amount of soot that is trapped in the filter. Figure 3 shows a schematic representation of an exhaust line showing various elements including catalyst unit 7, Diesel particulate filter 8 and muffler 9, each of which will have a pressure drop across them. The sum of the (delta) pressure losses in the exhaust line downstream of the turbine together with the (added) ambient pressure, is multiplied by the turbine pressure ratio to give the exhaust manifold pressure, often referred to as "P3".

For large turbochargers with a pronounced turbo lag {, the exhaust pressure may rise faster than the boost pressure (this behaves like a first order lag-filter with a time constant that changes with compressor flow). For such applications, in preferred embodiments, the boost pressure can be numerically processed by an algorithm to compensate the boost pressure lag and obtain an artificial boost pressure without lag. This signal is then used to calculate the "lag compensated" compressor pressure ratio. It is with this revised compressor pressure ratio that the look-up table procedure as described above will be performed. This leads to a modelled exhaust pressure with the correct dynamics.

In embodiments therefore inverse filtering on the boost pressure is applied to calculate the compressor outlet pressure and the compressor pressure ratio.

The transfer function of a first order lag is given by $1/(\tau s+1)$ with $\tau$ corresponding to the time constant.

It is for instance possible to use a compensator with a transfer function $(\tau s+1)/(cs+1)$ to reduce the lag and perform the reverse filtering of the measured/estimated boost pressure. By increasing the value of c, less lag is compensated.

The value of c would be for this specific compensator the value to adjust to make the P3 estimate match the real measurement. If c is for instance 10 times smaller than the time constant $\tau$, the compensator would produce an artificial boost pressure which would be 10 times "faster" than the measured/estimated boost pressure.

In a further refined embodiment, the continuous time compensator may be discretized and implemented in the ECU as a difference equation:

$$y(n) = b_0 x(n) + b_1 x(n-1) - a_1 y(n-1)$$

where:

y(n) is the compensated boost pressure at time index n

x(n) the measured/estimated boost pressure at time index n

a0, b0 and b1 are coefficients which depend on τ, c and the sampling period

To create for example a signal with a time constant of 2 seconds from a signal with a time constant of 8 seconds, (8s+1)/(2s+1) could be used as transfer function of the compensator. Assuming a sampling period of 0.320 seconds, discretization of this continuous time transfer function would lead to the transfer function (4z-3.852)/(z-0.8521) and the corresponding difference equation y(n) = 4x(n)-3.852x(n-1)+0.8521y(n-1).

Advantages of the invention is it is very quick as it limits the amount of engine parameters, and inherent complexity, of other methods based on energy balance between turbine and compressor.

## Claims

1. A method of determining the exhaust manifold pressure in an engine system which includes a turbocharger, comprising:

    i) determining the compressor pressure ratio;
    ii) determining the turbine pressure ratio from step i);
    iii) determining the exhaust manifold pressure from the turbine pressure ratio.

2. A method as claimed in claim 1 wherein step ii) comprises multiplying the determined compressor pressure ratio by a factor.

3. A method as claimed in claim 2 wherein said factor is determined from a stored look-up table.

4. A method as claimed in claim 2 or 3 wherein said factor is dependent on measured or estimated compressor flow and compressor pressure ratio.

5. A method as claimed in any preceding claim wherein step i) includes measuring or estimating, and utilising the parameter, of boost pressure.

6. A method as claimed in any step 5 where step i) comprises dividing measured or estimated compressor outlet pressure by the compressor inlet pressure.

7. A method as claimed in claim 6 wherein said measured or estimated compressor outlet pressure is based on the measured or estimated boost pressure.

8. A method as claimed in claim 7 wherein said measured or estimated compressor outlet pressure is based on the measured or estimated boost pressure plus an estimated pressure drop over an intercooler if present.

9. A method as claimed in claims 6 to 8 wherein compressor inlet pressure is determined from the ambient pressure, and optionally, minus estimated air filter or other inlet pressure losses.

10. A method as claimed in any preceding claim including applying a compensation to the measured/estimated boost pressure to reduce the pressure lag.

11. A method wherein said exhaust manifold pressure is determined by multiplying the determined turbine pressure ratio by the sum of the pressure losses in the exhaust system together with the ambient pressure.

12. Apparatus to determine the exhaust manifold pressure in an engine system which includes a turbocharger, comprising:

    i) means to determine the compressor pressure ratio;
    ii) means to determine the turbine pressure ratio from compressor ratio;
    iii) means to determine the exhaust manifold pressure from the turbine pressure ratio.

13. Apparatus as claimed in claim 12 wherein means ii) comprises means to multiply the determined compressor pressure ratio by a factor.

14. Apparatus as claimed in claim 13 wherein said factor is determined from a stored look-up table.

15. Apparatus as claimed in claim 13 or 14 wherein said factor is dependent on measured or estimated compressor flow and compressor pressure ratio.

16. Apparatus as claimed in claims 12 to 15 wherein means i) includes means to measure or estimate, and utilise the parameter, of boost pressure.

17. Apparatus as claimed in claims 10 to 16 where means i) comprises means to divide a measured or estimated compressor outlet pressure by the compressor inlet pressure.

18. Apparatus as claimed in claim 17 wherein said measured or estimated compressor outlet pressure is based on the measured or estimated boost pressure.

19. Apparatus as claimed in claim 17 or wherein said measured or estimated compressor outlet pressure is based on the measured or estimated boost pressure plus an estimated pressure drop over an intercooler, if present.

20. Apparatus as claimed in claim 17 to 19 wherein compressor inlet pressure is determined from the ambient pressure, and optionally, minus estimated air filter or other inlet pressure losses.

21. Apparatus as claimed in claims 12 to 20 including means to apply a compensation to the measured/estimated boost pressure to reduce the pressure lag.

22. Apparatus as claimed in claim 12 to 21 wherein said exhaust manifold pressure is determined by multiplying the determined turbine pressure ratio by the sum of the pressure losses in the exhaust system together with the ambient pressure.

FIG 1

Fig 2

1 - PSE_P3_FST_COMP_PRATIO_MUL_APA

| XY | 1.0000 | 1.2500 | 1.5000 | 1.7500 | 2.0000 | 2.2500 | 2.5000 | 2.8000 |
|---|---|---|---|---|---|---|---|---|
| 5.00 | 1.02002 | 1.08002 | 1.07001 | 1.03998 | 1.03003 | 1.03003 | 1.01501 | 1.01501 |
| 10.00 | 1.08002 | 1.08002 | 1.07001 | 1.03998 | 1.03003 | 1.03003 | 1.01501 | 1.01501 |
| 20.00 | 1.14001 | 1.12000 | 1.07501 | 1.03998 | 1.03497 | 1.03497 | 1.01501 | 1.01501 |
| 40.00 | 1.26501 | 1.24298 | 1.12000 | 1.10999 | 1.08002 | 1.04999 | 1.01501 | 1.01501 |
| 50.00 | 1.26501 | 1.24298 | 1.23999 | 1.23999 | 1.15002 | 1.10999 | 1.08002 | 1.03998 |
| 60.00 | 1.26501 | 1.24298 | 1.23999 | 1.23999 | 1.22998 | 1.20001 | 1.09998 | 1.06000 |
| 70.00 | 1.26501 | 1.24298 | 1.23999 | 1.23999 | 1.22998 | 1.20001 | 1.10999 | 1.08002 |
| 80.00 | 1.26501 | 1.24298 | 1.23999 | 1.23999 | 1.22998 | 1.20001 | 1.12000 | 1.09990 |

FIG 3

DOC = Diesel Oxydation catalyst
LNT = lean NOx Trap
DPF = Diesel Particulate Trap

P3 = (measured ambient pressure +Muffler pressure drop+ DPF pressure drop+Catalyst pressure drop) * Turbine pressure ratio

EP 2 846 027 A1

**Europäisches Patentamt**
**European Patent Office**
**Office européen des brevets**

# EUROPEAN SEARCH REPORT

Application Number

EP 13 19 1769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 910 059 A1 (RENAULT SAS [FR]) 20 June 2008 (2008-06-20) * page 2, lines 1-28 * | 1-4, 12-15 | INV. F02D41/14 F02D41/00 |
| Y | | 5-11, 16-22 | |
| X | US 2012/016602 A1 (FONTVIEILLE LAURENT [FR] ET AL) 19 January 2012 (2012-01-19) * pages 27-60 * | 1,12 | |
| Y | US 2009/094009 A1 (MULLER MARTIN [US] MUELLER MARTIN [US]) 9 April 2009 (2009-04-09) * columns 45-52 * | 5-9,11, 16-22 | |
| Y | US 2008/022679 A1 (HARA HIROFUMI [JP] ET AL) 31 January 2008 (2008-01-31) * paragraphs [0056], [0057] * * figure 7 * | 10,21 | |
| A | ERIKSSON L ET AL: "MODELING OF A TURBO CHARGED SI ENGINE", IFAC WORKSHOP ON ADVANCES IN AUTOMOTIVE CONTROL, XX, XX, 28 March 2001 (2001-03-28), pages 379-387, XP001032736, * paragraph [0003] * | 5-11, 16-22 | TECHNICAL FIELDS SEARCHED (IPC) F02D |

The present search report has been drawn up for all claims

| Place of search | Date of completion of the search | Examiner |
|---|---|---|
| The Hague | 7 February 2014 | Röttger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 19 1769

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2014

| Patent document cited in search report | | Publication date | Patent family member(s) | | Publication date |
|---|---|---|---|---|---|
| FR 2910059 | A1 | 20-06-2008 | FR<br>WO | 2910059 A1<br>2008084169 A2 | 20-06-2008<br>17-07-2008 |
| US 2012016602 | A1 | 19-01-2012 | CN<br>EP<br>FR<br>JP<br>KR<br>RU<br>US<br>WO | 102356222 A<br>2379860 A1<br>2941267 A1<br>2012515874 A<br>20110105873 A<br>2011134850 A<br>2012016602 A1<br>2010084255 A1 | 15-02-2012<br>26-10-2011<br>23-07-2010<br>12-07-2012<br>27-09-2011<br>27-02-2013<br>19-01-2012<br>29-07-2010 |
| US 2009094009 | A1 | 09-04-2009 | NONE | | |
| US 2008022679 | A1 | 31-01-2008 | JP<br>JP<br>US | 4815294 B2<br>2008025529 A<br>2008022679 A1 | 16-11-2011<br>07-02-2008<br>31-01-2008 |

EPO FORM P0459

For more details about this annex : see Official Journal of the European Patent Office, No. 12/82